# FASCICULE DE BREVET EUROPEEN

(11) **EP 1 933 531 B1**
(45) Date de publication et mention de la délivrance du brevet: **18.04.2012**
(21) Numéro de dépôt: 07291447.6
(22) Date de dépôt: 03.12.2007
(51) Int. Cl.: H04L 29/06

(54) **Dispositif de contrôle de communications sur IP entre des équipements de communication IP, avec prise de contrôle automatisée de leurs flux de média(s)**
Vorrichtung zur Kommunikationssteuerung über IP zwischen IP-Kommunikationsgeräten mit automatischer Kontrollübernahme ihres Medienflusses
Device for controlling communication over IP between IP communication devices, with automatic control of their media flow(s)

(30) Priorité: 11.12.2006 FR 0610766
(43) Date de publication de la demande: 18.06.2008
(73) Titulaire: Wengo, 92100 Boulogne Billancourt (FR)
(72) Inventeur: Wagner, Jérôme, 75003 Paris (FR)
(74) Mandataire: Plaçais, Jean Yves

(56) Documents cités:
- US-A1- 2002 066 109
- US-A1- 2004 210 638
- US-B1- 6 643 681

## Description

L'invention concerne le domaine des communications via un réseau de communication à protocole Internet (ou réseau IP), également appelées « communications sur IP », et plus précisément le contrôle de telles communications entre des équipements de communication capables de s'échanger des paquets IP de données générées par au moins un type de média.

On entend ici par « équipement de communication » tout type d'équipement informatique pourvu de moyens de communication (éventuellement multimédia) lui permettant d'établir des communications sur IP, via un réseau de communication filaire ou sans fil, éventuellement de type réseau de téléphonie (fixe ou mobile). Il pourra donc s'agir, par exemple, d'un (micro-)ordinateur, éventuellement portable, d'un téléphone IP, éventuellement mobile, ou d'un assistant personnel numérique (ou PDA) communiquant, et d'une manière générale de n'importe quel type de terminal connecté à un réseau IP.

Par ailleurs, on entend ici par « média » n'importe quel média capable de fournir des données de n'importe quel type pouvant être échangées entre des équipements (ou entités) ayant établi entre elles un canal de communication, et notamment des données audio, vidéo, des fichiers de données à transférer, des données de messagerie dite instantanée (ou « chat »), ou des données de messagerie dite électronique (ou « e-mail », ou encore courriel).

Comme le sait l'homme de l'art, pour qu'un équipement (de communication) puisse établir des communications sur IP, son utilisateur doit télécharger dans cet équipement, via l'Internet, un logiciel dédié à cet effet. Puis, il doit démarrer ce logiciel dédié, puis la plupart du temps créer un compte sur un serveur dédié en s'enregistrant au moyen d'un pseudonyme, puis avertir chaque utilisateur avec lequel il souhaite établir une communication sur IP (éventuellement multimédia), par exemple au moyen d'un appel téléphonique ou par transmission d'un message électronique (SMS, MMS ou e-mail), afin de lui communiquer les coordonnées du serveur dédié et son pseudonyme. Puis, chaque utilisateur averti doit à son tour télécharger et démarrer un logiciel dédié, puis établir un compte sur le serveur dédié en s'enregistrant au moyen d'un pseudonyme, et fournir son pseudonyme à l'utilisateur qui souhaite établir la communication avec lui, par exemple au moyen d'un nouvel appel téléphonique ou par transmission d'un nouveau message électronique (SMS, MMS ou e-mail). Ensuite, les utilisateurs doivent configurer leurs équipements respectifs, au moyen de leur logiciel dédié, afin de pouvoir échanger des flux de données d'au moins un type (par exemple audio (fournies par exemple par le microphone de l'équipement ou un microphone auxiliaire) et/ou vidéo (par exemple fournies par un périphérique auxiliaire tel qu'une caméra (« webcam »)).

En raison du nombre important d'interventions nécessaires actuellement à l'établissement d'une communication sur IP, de nombreuses personnes refusent ce type de communication malgré les avantages, notamment financiers, qu'il procure.

Le document US 2002/0066109 A1 décrit un système unifié pour organiser des sessions de videoconférence multipoints qui comprend un serveur, un ou plusieurs points d'accès vidéo, des réflecteurs et des machines clients. Les réflecteurs organisent la distribution du signal entre clients proches.

L'invention a donc pour but d'améliorer la situation, et notamment de réduire de façon importante le nombre d'interventions nécessaires à l'établissement d'une communication sur IP, tout en simplifiant ces interventions réduites.

Elle propose à cet effet un dispositif dédié au contrôle des communications sur IP établies entre au moins deux équipements de communication capables de s'échanger des paquets IP de données (générées par au moins un type de média) via au moins un réseau (de communication).

Ce dispositif de contrôle se caractérise par le fait qu'il comprend des moyens de contrôle destinés à être implantés dans au moins un serveur disposant d'une adresse IP et chargés :
- de déclencher sur requête la transmission de fichiers à exécuter vers des équipements de communication, ces fichiers étant destinés (une fois exécutés par un équipement de communication) à permettre, d'une part, l'enregistrement de façon automatisée, auprès du serveur, de l'utilisateur de cet équipement de communication (par exemple afin de signaler qu'il est prêt à participer à une communication sur IP, ou qu'il souhaite qu'on lui transmette une liste d'autres utilisateurs enregistrés, ou encore qu'il souhaite établir une communication sur IP avec au moins un autre utilisateur enregistré), et d'autre part, la prise de contrôle dans l'équipement de communication de chaque flux généré par un média dont l'accès a été autorisé par son utilisateur, et
- en cas d'enregistrement auprès du serveur d'au moins deux utilisateurs (par exemple au moins deux personnes, ou au moins une personne et au moins un utilisateur virtuel) désirant établir une communication sur IP entre eux, d'organiser le relais et la gestion des flux autorisés entre leurs équipements de communication pendant toute la durée de la communication sur IP.

Le dispositif selon l'invention peut comporter d'autres caractéristiques qui peuvent être prises séparément ou en combinaison, et notamment :
- ses fichiers peuvent être agencés, une fois qu'ils ont été exécutés, de manière à prendre le contrôle de flux générés par des médias choisis parmi l'audio, la vidéo, le transfert de fichiers de données, la messagerie instantanée et la messagerie électronique ;
- ses fichiers peuvent être agencés, une fois qu'ils ont été exécutés dans un équipement de communication, de manière à organiser, d'une part, l'établissement d'un canal de communication bidirectionnelle, via le réseau IP, entre cet équipement de communication et le serveur, et d'autre part, la transmission aux moyens de contrôle, via le canal de communication, de données propres à leur permettre d'enregistrer l'utilisateur de cet équipement de communication et chaque type de média dont l'accès a été autorisé par l'utilisateur ;
   ➢ ses fichiers peuvent être agencés, une fois qu'ils ont été exécutés dans un équipement de communication et lorsque l'utilisateur de ce dernier ne peut pas établir une communication sur IP avec un autre utilisateur du fait qu'il n'est pas enregistré auprès du serveur, de manière à permettre à l'utilisateur de transmettre au serveur, via le canal de communication établi, un message qui est destiné à cet autre utilisateur. Dans ce cas, les moyens de contrôle sont chargés, lorsque l'autre utilisateur s'enregistre auprès du serveur, de signaler à cet autre utilisateur l'existence du message qui lui est destiné ;
- ses moyens de contrôle peuvent être chargés, lorsqu'un utilisateur s'est enregistré auprès d'eux, de stocker dans le serveur des données représentatives d'une opération qu'ils vont devoir effectuer si un autre utilisateur enregistré cherche à établir une communication sur IP avec cet utilisateur, mais que ce dernier s'est désenregistré ;
   ➢ l'opération est par exemple choisie parmi le transfert d'appel vers un identifiant de communication donné, et la fourniture à l'autre utilisateur d'un message préalablement enregistré par l'utilisateur désenregistré et stocké dans le serveur ;
- ses fichiers peuvent être agencés, une fois qu'ils ont été exécutés dans un équipement de communication, de manière à permettre à son utilisateur de définir au moins un filtre destiné à sélectionner certains utilisateurs parmi tous ceux enregistrés, en fonction d'au moins un critère choisi. Ainsi, l'utilisateur peut choisir parmi les utilisateurs sélectionnés chaque utilisateur enregistré avec lequel il veut établir une communication sur IP via le serveur ;
- ses fichiers peuvent être agencés, une fois qu'ils ont été exécutés dans un équipement de communication et lorsqu'une communication sur IP a été établie avec au moins un autre utilisateur, de manière à permettre à l'utilisateur de cet équipement de communication de sélectionner un nouveau média auquel il autorise l'accès ou de désélectionner un média auquel il avait autorisé l'accès ;
- il peut comprendre des moyens de gestion couplés aux moyens de contrôle, destinés à être implantés dans au moins un serveur et chargés de gérer la valorisation et/ou la facturation d'opérations effectuées par l'un au moins des utilisateurs qui sont impliqués dans une communication sur IP (via le serveur), en fonction d'un barème choisi, et/ou la durée autorisée d'une communication sur IP (via le serveur), en fonction d'au moins un critère choisi, et/ou la facturation d'une communication sur IP (via le serveur) à l'un au moins des utilisateurs qui sont impliqués dans une communication sur IP, en fonction d'un barème choisi.

L'invention propose également un serveur Internet, pour un réseau IP, équipé d'un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre de façon très schématique et fonctionnelle une installation de communication comprenant un serveur Internet équipé d'un exemple de réalisation d'un dispositif de contrôle selon l'invention, et
- la figure 2 illustre de façon très schématique un exemple de fenêtre d'affichage permettant à un utilisateur i) de sélectionner le(s) média(s) au(x)quel(s) il autorise l'accès et le(s) utilisateur(s) avec le(s)quel(s) il souhaite établir une communication sur IP, et ii) de s'enregistrer ou se désenregistrer.

Les dessins annexés pourront non seulement servir à compléter l'invention, mais aussi contribuer à sa définition, le cas échéant.

L'invention a notamment pour objet de permettre à des utilisateurs d'équipements de communication sur IP d'établir entre eux des communications sur IP de façon simple et rapide et avec un nombre d'interventions (ou opérations) très réduit.

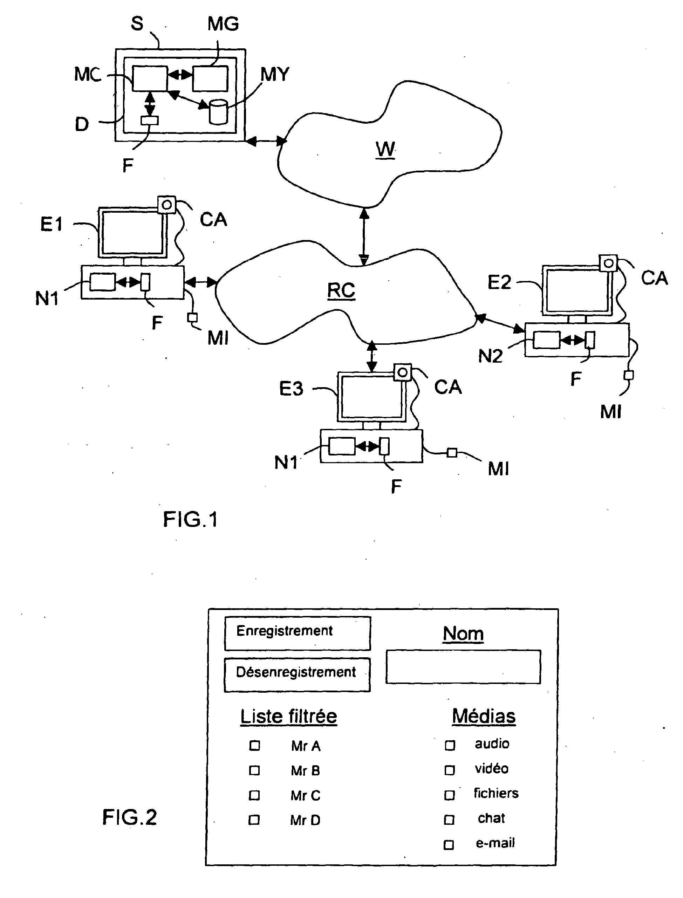

Dans ce qui suit et comme illustré sur la figure 1, on considère à titre d'exemple non limitatif que les équipements de communication Ei (ici i = 1 à 3) des utilisateurs sont des micro-ordinateurs équipés d'un module de communication capable d'établir des communications sur IP via un réseau de communication RC, par exemple filaire (éventuellement de type xDSL ou câblé), afin d'échanger des paquets IP de données générées par au moins un type de média. Par exemple et comme illustré, chaque micro-ordinateur est équipé de deux accessoires périphériques, l'un délivrant des données de type audio (comme par exemple un microphone MI) et l'autre délivrant des données de type vidéo (comme par exemple une caméra (ou « webcam ») CA).

Mais, l'invention n'est pas limitée à ce type d'équipement de communication sur IP. Elle concerne en effet tout type d'équipement informatique pourvu, d'une part, de moyens de communication (éventuellement multimédia) lui permettant d'établir des communications sur IP, via un réseau de communication filaire ou sans fil, éventuellement de type réseau de téléphonie (fixe ou mobile), et d'autre part, d'un navigateur Internet (ou « browser ») Nj (ici j = 1 ou 2 pour signaler des types différents à titre d'exemple non limitatif). Il pourra donc également s'agir, par exemple, d'un micro-ordinateur portable, d'un téléphone IP, éventuellement mobile, ou d'un assistant personnel numérique (ou PDA) communiquant. Tout type de navigateur Internet Nj est concerné par l'invention, et notamment Windows, GNU/Linux et MacOS X.

Par ailleurs, l'invention n'est pas limitée aux équipements de communication sur IP (ci-après appelés de façon abrégée « équipements ») munis d'un média audio (MI) et d'un média vidéo (CA). En effet, l'invention s'applique dès lors que l'équipement Ei dispose d'au moins un média générant des données à transmettre quel que soit le type [audio, vidéo, fichier(s) à transférer, messagerie instantanée (ou chat), messagerie électronique (ou e-mail), notamment].

En outre, on considère dans ce qui suit que les utilisateurs d'équipements Ei sont des personnes (physiques). Mais, cela n'est pas obligatoire. Il peut en effet également s'agir d'utilisateurs virtuels, comme par exemple des robots ou automates recevant des demandes d'action(s) en provenance de personnes (physiques).

L'invention propose d'implanter dans au moins un serveur Internet S un dispositif D chargé de contrôler les communications sur IP entre au moins deux équipements Ei et Ei', via un réseau de communication RC de type IP, lui-même connecté au réseau Internet (ou « web ») W.

On entend ici par « réseau de communication de type IP » un réseau de communication (éventuellement de téléphonie) auquel peuvent se connecter (par voie filaire ou par voie d'ondes) des équipements Ei et capable de transporter des paquets IP de données.

Le serveur Internet S est connecté au réseau Internet W et dispose d'une adresse IP.

Comme cela est schématiquement illustré sur la figure 1, le dispositif D comprend au moins un module de contrôle MC et un ensemble de fichiers à exécuter, référencé F.

Le module de contrôle MC est tout d'abord chargé de déclencher sur requête la transmission de l'ensemble de fichiers F vers des équipements de communication. Plus précisément, chaque fois qu'un utilisateur souhaite s'enregistrer de façon automatisée auprès du serveur S, afin de signaler qu'il est prêt à participer à une communication sur IP ou qu'il souhaite établir une communication sur IP avec au moins un autre utilisateur déjà enregistré, il doit accéder au serveur S. Cette accession peut se faire soit de façon directe, c'est-à-dire par fourniture par l'utilisateur de l'adresse IP du serveur S au navigateur Internet Nj de son équipement Ei, soit de façon indirecte, c'est-à-dire via une page de type HTML (« HyperText Markup Language ») d'un site Internet offrant un lien vers le serveur S. Dans ce second cas, l'utilisateur doit donc tout d'abord utiliser le navigateur Internet Nj de son équipement Ei pour accéder au site Internet offrant le lien vers le serveur S, puis cliquer sur ce lien pour accéder au serveur S.

L'accession d'un équipement Ei au serveur S déclenche, de préférence automatiquement, la transmission de l'ensemble de fichiers F vers cet équipement Ei. De préférence, l'ensemble de fichiers F n'est pas sélectionné par le module de contrôle MC en fonction du type du navigateur Internet Nj de l'équipement Ei requérant. En d'autres termes, l'ensemble de fichiers F peut être exécuté par n'importe quel type de navigateur Internet Nj.

Lorsque le navigateur Internet Nj d'un équipement Ei reçoit l'ensemble de fichiers F, il exécute automatiquement lesdits fichiers reçus (sans intervention de l'utilisateur). Cette exécution de l'ensemble de fichiers F permet alors au navigateur Nj d'effectuer deux actions.

La première action consiste à enregistrer de façon automatisée auprès du serveur S l'utilisateur de l'équipement Ei, afin de signaler au module de contrôle MC, par exemple, soit que cet utilisateur est prêt à participer à une communication sur IP, soit qu'il souhaite obtenir une liste d'autres utilisateurs enregistrés, soit encore qu'il souhaite établir une communication sur IP avec au moins un autre utilisateur déjà enregistré. Il est important de noter que l'on entend par « enregistrer un utilisateur » le fait de stocker dans une mémoire MY du serveur S un identifiant de communication de son équipement Ei (par exemple son adresse IP), éventuellement en correspondance d'un nom ou pseudonyme ou d'un dessin caractéristique.

Comme cela est schématiquement illustré sur la figure 2, lorsque l'utilisateur ne veut que signaler qu'il est prêt à participer à une communication, il peut par exemple cliquer sur une icône dédiée (« Enregistrement ») d'une fenêtre d'affichage, qui est générée par l'ensemble de fichiers F et qui s'affiche automatiquement sur l'écran de son équipement Ei. Lorsque l'utilisateur a cliqué sur cette icône dédiée l'ensemble de fichiers F déclenche automatiquement l'envoi vers le serveur S d'un message d'enregistrement contenant l'adresse IP de l'équipement Ei.

On peut également envisager que l'utilisateur saisisse son nom ou son pseudonyme (« Nom ») dans une zone dédiée (rectangle vide placé sous le mot « Nom ») de la fenêtre d'affichage, avant de cliquer sur l'icône dédiée (« Enregistrement »). Lorsque l'utilisateur a effectué sa saisie et cliqué sur l'icône dédiée à l'enregistrement, l'ensemble de fichiers F déclenche automatiquement l'envoi vers le serveur S d'un message d'enregistrement contenant l'adresse IP de l'équipement Ei et le nom de l'utilisateur. On notera que la saisie du nom de l'utilisateur n'est pas obligatoire lorsque le serveur S dispose déjà d'une table de correspondance entre des identifiants de communication et des noms d'utilisateurs. En effet, dans ce cas lorsque le serveur S reçoit le message d'enregistrement, son module de contrôle MC (par exemple) en extrait l'adresse IP et recherche dans sa table de correspondance le nom qui lui correspond.

Dans un cas comme dans l'autre, lorsque le serveur S reçoit un message d'enregistrement, son module de contrôle MC (par exemple) stocke dans la mémoire MY le nom de l'utilisateur qui s'est enregistré, éventuellement en correspondance de l'identifiant de communication de son équipement Ei. On peut également envisager que le module de contrôle MC (par exemple) ne stocke dans la mémoire MY que l'identifiant de communication de l'équipement Ei de l'utilisateur qui s'est enregistré, mais cela imposerait que l'on ne transmette aux autres utilisateurs que les identifiants de communication des équipements ou bien que l'on dispose en complément d'une table de correspondance entre des identifiants de communication d'équipements et des noms d'utilisateurs.

Comme cela est schématiquement illustré sur la figure 2, lorsque l'utilisateur veut signaler qu'il souhaite établir une communication avec au moins un autre utilisateur déjà enregistré, il peut par exemple le choisir dans une liste d'utilisateurs enregistrés (« Mr A », « Mr B », « Mr C », « Mr D »,...) (affichée dans une fenêtre d'affichage d'un équipement Ei, générée par ledit ensemble de fichiers F).

Une liste d'utilisateurs enregistrés peut être obtenue par un utilisateur de différentes manières. Ainsi, on peut envisager d'obtenir une liste partielle ou complète auprès d'un site Internet, par exemple via un lien proposé dans la (ou une) fenêtre d'affichage générée par l'ensemble de fichiers F. On peut également envisager d'obtenir une liste partielle ou complète auprès du serveur S en lui adressant une requête, par exemple en cliquant sur une icône dédiée proposée dans la (ou une) fenêtre d'affichage générée par l'ensemble de fichiers F. On peut également envisager que le module de contrôle MC transmette automatiquement une liste partielle ou complète à un équipement Ei consécutivement à l'enregistrement de son utilisateur.

Le choix de chaque utilisateur avec lequel on souhaite établir une communication se fait par exemple en cliquant sur la case placée en regard du nom d'un utilisateur. Bien entendu, plusieurs utilisateurs enregistrés peuvent être choisis. Puis, l'utilisateur peut par exemple cliquer sur l'icône dédiée (« Enregistrement ») de la fenêtre d'affichage. Lorsque l'utilisateur a cliqué sur cette icône dédiée l'ensemble de fichiers F déclenche automatiquement l'envoi vers le serveur S d'un message d'enregistrement contenant l'adresse IP de l'équipement Ei et le nom de chaque utilisateur choisi.

On peut également envisager que l'utilisateur saisisse son nom ou son pseudonyme (« Nom ») dans une zone dédiée (rectangle vide placé sous le mot « Nom ») de la fenêtre d'affichage, avant de cliquer sur l'icône dédiée (« Enregistrement »). Lorsque l'utilisateur a effectué son choix d'utilisateur(s), la saisie de son nom et cliqué sur l'icône dédiée à l'enregistrement, l'ensemble de fichiers F déclenche automatiquement l'envoi vers le serveur S d'un message d'enregistrement contenant l'adresse IP de l'équipement Ei, le nom de chaque utilisateur choisi et le nom de l'utilisateur.

On notera que l'utilisateur n'est pas obligé de choisir à ce stade le ou les médias de son équipement Ei qu'il met à la disposition de la communication sur IP souhaitée. Ce choix est de préférence effectué ultérieurement, par exemple en cliquant sur la case placée en regard du média mis à disposition. Mais, on pourrait également envisager qu'il se fasse à ce stade.

Afin de permettre la transmission d'un message d'enregistrement d'un équipement Ei vers le serveur S, mais également l'échange de paquets IP de données dans le cadre d'une communication sur IP, l'ensemble de fichiers F organise de façon automatisée l'établissement d'un canal logique de communication bidirectionnelle (par exemple de type « full-duplex »), via le réseau IP RC et le web W, entre cet équipement Ei et le serveur S. Il est important de noter qu'un canal de communication bidirectionnelle demeure établi entre un équipement Ei et le serveur S tant que l'utilisateur de ce dernier est enregistré auprès du serveur S. Le désenregistrement d'un utilisateur se fait par exemple de façon automatique lorsqu'il ferme la page Internet du site qu'il était en train de visiter et qui contenait le lien vers le serveur S, ou bien lorsque l'utilisateur quitte le lien établi directement avec le serveur S. On peut également envisager (comme illustré de façon non limitative sur la figure 2) que l'ensemble de fichiers F propose une icône de désenregistrement (« Désenregistrement ») dans une fenêtre d'affichage (éventuellement celle utilisée pour l'enregistrement et la sélection d'utilisateurs et de média). Dans ce cas, lorsque l'utilisateur enregistré d'un équipement Ei clique sur cette icône de désenregistrement, l'ensemble de fichiers F transmet un message de désenregistrement au serveur S, dans le canal de communication bidirectionnelle de l'équipement Ei.

Lorsque le serveur S reçoit un message d'enregistrement contenant la désignation d'utilisateur(s) enregistré(s), son module de contrôle MC (par exemple) stocke dans la mémoire MY le nom de l'utilisateur qui s'est enregistré, éventuellement en correspondance de l'identifiant de communication de son équipement Ei. On peut également envisager que le module de contrôle MC (par exemple) ne stocke dans la mémoire MY que l'identifiant de communication de l'utilisateur qui s'est enregistré. Puis, le module de contrôle MC établit une liaison (ou un relais) entre le canal de communication bidirectionnelle nouvellement établi entre l'équipement Ei de l'utilisateur qui vient de s'enregistrer et son serveur S et entre le canal de communication bidirectionnelle établi entre l'équipement Ei' de chaque utilisateur désigné et son serveur S. Cette ou ces liaisons reviennent à enregistrer ensemble les équipements Ei et Ei', à la demande de l'utilisateur de l'équipement Ei qui requiert l'établissement de la communication.

On notera que pour générer la fenêtre d'affichage ou le message d'enregistrement, l'ensemble de fichiers F utilise de préférence des primitives (ou fonctions) qui préexistent nativement dans le navigateur Nj de l'équipement Ei dans lequel il est exécuté. Par exemple, il utilise des primitives de type Flash telles que « System.showSettings » et « NetStream.attachAudio() ».

Dans ce cas, il est avantageux que les fichiers de l'ensemble F soient une combinaison de fichiers au format dit SWF et javascript. On notera qu'il est possible d'utiliser des primitives d'un autre type que Flash dès lors qu'elles sont intégrées dans et compréhensibles (utilisables) par les navigateurs Internet.

La seconde action permise par l'ensemble de fichiers F consiste à prendre le contrôle dans un équipement Ei de chaque flux généré par un média dont l'accès a été autorisé par son utilisateur. Comme évoqué ci-avant, l'ensemble de fichiers F propose à l'utilisateur (dans une fenêtre d'affichage, de préférence la même que celle utilisée pour la phase d'enregistrement (voir figure 2)), de choisir chaque média de son équipement Ei qu'il met à disposition de la communication sur IP souhaitée. En d'autres termes, la sélection d'un média par l'utilisateur constitue une autorisation d'accès aux flux générés par ce média pour une partie au moins de la durée de la communication sur IP souhaitée (c'est-à-dire tant que l'utilisateur ne décide pas de retirer une autorisation d'accès à un média).

On notera que pour prendre le contrôle d'un média, l'ensemble de fichiers F utilise de préférence des primitives (ou fonctions) qui préexistent nativement dans le navigateur Nj de l'équipement Ei dans lequel il est exécuté. Par exemple, il utilise des primitives de type Flash.

La désignation de chaque média sélectionné par un utilisateur peut être transmise au serveur S par un ensemble de fichiers F soit dans un message d'enregistrement, soit dans un message dédié, postérieur à la transmission du message d'enregistrement. Lorsque le serveur S reçoit un message d'enregistrement ou un message dédié contenant au moins une désignation de média, son module de contrôle MC (par exemple) le configure afin qu'il soit en mesure de transférer les flux du média désigné, issus de l'équipement Ei d'où est issu le message, vers chaque équipement Ei' d'un utilisateur enregistré choisi.

Le module de contrôle MC est donc également chargé d'organiser le relais et la gestion des flux autorisés entre les équipements Ei et Ei' d'utilisateurs enregistrés (via les canaux de communication bidirectionnelle dont la création a été organisée par leurs ensembles de fichiers F respectifs et par les choix fonctionnels effectués par les utilisateurs), pendant toute la durée de leur communication sur IP. On notera que la gestion des flux comprend notamment tout ce qui concerne la signalisation nécessaire à l'établissement et au maintien d'un canal de communication bidirectionnelle entre un équipement Ei et le serveur S.

Grâce à l'invention, chaque utilisateur impliqué dans une communication sur IP est libre de choisir le ou les médias qui génèrent les flux qu'il souhaite transmettre. Par exemple, si un premier utilisateur sélectionne les média audio MC (microphone) et vidéo CA (caméra) de son premier équipement E1, tandis qu'un second utilisateur ne sélectionne que le média audio MC (microphone) de son second équipement E2, alors le premier équipement E1 ne pourra que diffuser sur son haut-parleur (ou un casque périphérique) les données audio du flux audio issu du second équipement E2, et le second équipement E2 pourra diffuser sur son haut-parleur (ou un casque périphérique) les données audio du flux audio issu du premier équipement E1 et afficher sur son écran les images définies par les données vidéo issues du premier équipement E1. Comme indiqué précédemment tout type de combinaison de flux générés par au moins un média peut être envisagé au niveau de l'équipement Ei de chaque utilisateur impliqué dans une communication sur IP.

Il est important de noter que l'invention s'applique aussi bien aux communications sur IP de type « un vers un » (c'est-à-dire permettant de transmettre tous les flux autorisés d'un premier équipement Ei vers un second équipement Ei') qu'aux communications sur IP de type « un vers plusieurs » (c'est-à-dire permettant de transmettre tous les flux autorisés d'un premier équipement Ei vers plusieurs (au moins deux) seconds équipements Ei', de façon sensiblement simultanée) et qu'aux communications sur IP de type « plusieurs vers plusieurs » (c'est-à-dire permettant de transmettre tous les flux autorisés de plusieurs (au moins deux) premiers équipements Ei vers plusieurs (au moins deux) seconds équipements Ei', de façon sensiblement simultanée).

L'ensemble de fichiers F peut être également chargé d'effectuer d'autres opérations (ou actions). Ainsi, il peut par exemple permettre à un premier utilisateur, qui souhaite établir une communication avec au moins un second utilisateur qui n'est pas enregistré auprès du serveur S, de transmettre au serveur S un message qui est destiné à chaque second utilisateur, via le canal de communication bidirectionnelle établi entre son équipement Ei et ledit serveur S. Un tel message contient donc le nom de l'utilisateur non enregistré et/ou l'identifiant de communication de son équipement Ei' et des données textuelles et/ou audio définissant le contenu du message. Ce contenu peut par exemple proposer d'établir une communication à partir d'une certaine heure d'une certaine date ou dans un intervalle de temps d'une certaine date, ou bien signaler que son auteur ne sera pas joignable à certaines dates et/ou certains horaires, ou encore de proposer d'appeler son auteur sur son téléphone (fixe ou mobile) à partir d'une certaine heure d'une certaine date ou dans un intervalle de temps d'une certaine date. Le contenu du message est saisi (mode textuel) et/ou enregistré (mode audio) à l'invite d'un message généré et affiché par l'ensemble de fichiers F lorsqu'il détecte que l'utilisateur souhaite établir une communication avec au moins un utilisateur non enregistré.

Le contenu du message est stocké par le module de contrôle MC, dans une mémoire de messages de son dispositif D ou du serveur S, en correspondance du nom et/ou de l'adresse IP de l'utilisateur non enregistré. Ainsi, lorsqu'un utilisateur jusqu'alors non enregistré s'enregistre auprès du serveur S (grâce à un ensemble de fichiers F transmis à son équipement Ei'), le module de contrôle MC analyse la mémoire de messages afin de déterminer si un message est destiné à cet utilisateur, et si tel est le cas il lui communique son contenu via le canal de communication bidirectionnelle nouvellement établi entre son équipement Ei' et le serveur S.

En variante ou en complément, l'ensemble de fichiers F peut par exemple (une fois exécuté dans un équipement Ei) permettre à l'utilisateur de ce dernier de définir au moins un filtre de sélection d'utilisateur(s). On entend ici par « filtre » un module logiciel configurable par un utilisateur en fonction d'au moins un critère qu'il a choisi (de préférence dans une liste proposée par l'ensemble de fichiers F dans une fenêtre d'affichage) et destiné à sélectionner automatiquement certains utilisateurs parmi tous ceux qui sont enregistrés auprès d'un serveur S. Tout type de critère peut être utilisé, et notamment un critère d'appartenance à une liste de noms prédéfinie (professionnelle ou privée), ou bien un critère d'appartenance à une liste d'adresses IP prédéfinie ou à un ensemble d'adresses IP correspondant à au moins une zone géographique particulière.

Ainsi, lorsqu'un utilisateur veut établir une communication sur IP conformément à l'invention, l'ensemble de fichiers F qu'il a téléchargé automatiquement ne lui propose que les utilisateurs enregistrés qui satisfont à chaque critère de filtrage qu'il a choisi, si bien qu'il n'a plus qu'à choisir parmi ces utilisateurs filtrés chaque utilisateur avec lequel il veut établir ladite communication sur IP, via le serveur S.

En variante ou en complément, l'ensemble de fichiers F peut par exemple (une fois exécuté dans l'équipement Ei d'un premier utilisateur et lorsque cet équipement Ei communique avec l'équipement Ei' d'au moins un second utilisateur) permettre au premier utilisateur de sélectionner à tout moment un nouveau média auquel il autorise l'accès et/ou de désélectionner un média auquel il avait jusqu'alors autorisé l'accès. Pour ce faire, il suffit au premier utilisateur de cliquer dans la case dédiée au média qu'il souhaite sélectionner ou désélectionner. Si l'utilisateur clique sur un média qui n'était pas sélectionné, l'ensemble de fichiers F comprend qu'il est autorisé à prendre le contrôle de ce nouveau média et donc à transférer les flux qu'il produit vers l'équipement Ei' de chaque second utilisateur impliqué dans la communication sur IP. Si l'utilisateur clique sur un média qui était jusqu'alors sélectionné, l'ensemble de fichiers F comprend qu'il n'est plus autorisé à prendre le contrôle de ce média et donc il cesse immédiatement de transférer les flux produits par ce média vers l'équipement Ei' de chaque second utilisateur impliqué dans la communication sur IP.

Ce type d'action (nouvelle sélection, désélection) est accompagné par une signalisation entre l'équipement Ei et le serveur S, via le canal de communication bidirectionnelle qui les relie.

Il est important de noter que l'ensemble de fichiers F peut éventuellement être agencé de manière à permettre à un utilisateur impliqué dans une communication sur IP de refuser de recevoir un ou plusieurs types de flux. Cela peut par exemple permettre à une personne qui ne veux que diffuser des flux vers une ou plusieurs autres personnes (par exemple dans le cadre d'une conférence ou d'un cours) de ne pas être dérangée par les flux que pourraient vouloir lui transmettre ces autres personnes. Dans ce cas, l'ensemble de fichiers F propose à l'utilisateur une fenêtre désignant chaque média que chaque autre utilisateur se propose d'utiliser pour lui transmettre des flux, et cet utilisateur n'a qu'à sélectionner chaque média duquel il veut bien recevoir des flux, par exemple en cliquant sur une case qui lui est dédiée.

Le module de contrôle MC peut être éventuellement agencé de manière à stocker dans une mémoire d'opérations du serveur S (ou de son dispositif D) des données qui représentent une opération qu'il va devoir effectuer si un utilisateur enregistré cherche à établir une communication avec un utilisateur qui s'était enregistré auprès d'eux mais qui s'est désenregistré.

Une telle opération peut par exemple consister à transférer l'appel vers un identifiant de communication donné, comme par exemple celui d'une messagerie ou d'une boîte vocale dans laquelle l'utilisateur qui s'est désenregistré avait précédemment stocké un message, ou d'un téléphone sur lequel l'utilisateur qui s'est désenregistré peut désormais être joint (cela nécessite alors de sortir de l'environnement purement web pour se coupler à un environnement de téléphonie (éventuellement mobile).

Les données qui définissent l'opération à effectuer sont stockées dans la mémoire d'opérations par le module de contrôle MC en correspondance du nom et/ou de l'adresse IP de l'utilisateur désenregistré. Ainsi, lorsqu'un premier utilisateur tente d'établir une communication sur IP avec un second utilisateur qui s'est désenregistré, le module de contrôle MC analyse la mémoire d'opérations afin de déterminer si elle stocke une définition d'opération concernant ce second utilisateur, et si tel est le cas il effectue l'opération définie.

Comme cela est illustré sur la figure 1, le dispositif D peut également comprendre un module de gestion MG couplé à son module de contrôle MC et destiné à être implanté dans au moins un serveur, de préférence le même (S) que celui qui comprend le module de contrôle MC (bien que cela ne soit pas obligatoire puisque le dispositif D peut être distribué dans plusieurs serveurs).

Ce module de gestion MG est destiné à assurer une fonction que l'on peut qualifier de valorisation. Plus précisément, il est chargé d'analyser tous les flux des communications sur IP qui passent par un serveur S afin de permettre plusieurs actions.

Une première action peut par exemple consister à facturer tout ou partie des opérations (ou actions) effectuées par l'un au moins des utilisateurs qui sont impliqués dans une communication sur IP via le serveur S, en fonction d'un barème choisi. Ainsi, chaque fois qu'un utilisateur choisi effectue une action choisie avec le clavier ou la souris de son équipement Ei, comme par exemple gagner une pièce choisie au cours d'une partie d'échec ou de dames, il peut être crédité ou débité d'un montant choisi sur son compte. Par exemple le gain d'un pion entraîne un crédit d'un euro, tandis que le gain d'une dame entraîne un crédit de cinq euros. Dans une autre application, chaque fois qu'un utilisateur inscrit un cercle sur un tableau blanc il peut être crédité ou débité d'un montant choisi sur son compte.

Une deuxième action (combinable avec la première) peut par exemple consister à gérer la durée autorisée d'une communication sur IP (via le serveur S), en fonction d'au moins un critère choisi. On peut en effet envisager que certains utilisateurs ne soient autorisés à communiquer sur IP que pendant une durée prédéfinie. Dans ce cas, lorsque le module de gestion MG détecte qu'un tel utilisateur a établi une communication sur IP via le serveur S, il déclenche une temporisation égale à la durée prédéfinie à laquelle il a droit, et lorsque cette durée expire il ordonne au module de contrôle MC de mettre fin à la communication sur IP pour cet utilisateur (les flux issus du ou des autres utilisateurs ne lui sont plus transmis).

Une troisième action (combinable avec la première et/ou la deuxième) peut par exemple consister à facturer une communication sur IP (via le serveur S) à l'un au moins des utilisateurs qui sont impliqués dans celle-ci, en fonction d'un barème choisi. Cela peut par exemple permettre à un expert ou à un enseignant de fournir des informations à des tiers moyennant une rémunération prédéfinie par un tarif horaire (par exemple 1 euro ou 5 euros la minute).

Le dispositif de contrôle D selon l'invention, et notamment son module de contrôle MC et son éventuel module de gestion MG, sont préférentiellement réalisés sous la forme de modules logiciels (ou informatiques). Mais, le module de contrôle MC et l'éventuel module de gestion MG peuvent être également réalisés sous la forme de circuits électroniques ou d'une combinaison de circuits et de logiciels.

On notera que l'invention peut être également considérée sous l'angle d'un procédé de contrôle de communication pouvant être mis en oeuvre aux moyens d'équipements de communication et de serveur(s) du type de ceux décrits ci-avant en référence à aux figures 1 et 2.

Ce procédé consiste, pour ses principales étapes :
- en cas d'accès d'un équipement de communication Ei à un serveur S, via un réseau de communication IP RC, à transmettre à cet équipement de communication Ei des fichiers à exécuter,
- puis, en cas d'exécution de ces fichiers par l'équipement de communication Ei, à utiliser lesdits fichiers pour enregistrer son premier utilisateur de façon automatisée auprès du serveur S afin de signaler à ce dernier soit qu'il est prêt à participer à une communication soit qu'il souhaite établir une communication avec au moins un second utilisateur déjà enregistré,
- puis, lorsque le premier utilisateur souhaite établir une communication avec au moins un second utilisateur déjà enregistré, à utiliser les fichiers exécutés pour prendre le contrôle, dans l'équipement de communication Ei du premier utilisateur et dans l'équipement de communication Ei' de chaque second utilisateur, de chaque flux généré par un média pour lequel ils ont donné une autorisation d'accès, et
- à organiser le relais et la gestion des flux autorisés entre les équipements de communication Ei et Ei' des premier et second(s) utilisateurs, ainsi qu'éventuellement la facturation de la communication, pendant la durée de cette dernière.

On notera que l'invention concerne d'autres applications que celle décrite ci-avant, et notamment le partage de tableaux blancs, la navigation partagée, les jeux en réseau, et le pilotage par la voix d'applications distantes.

L'invention ne se limite pas aux modes de réalisation de dispositif de contrôle de communication, de serveur et de procédé de contrôle de communication décrits ci-avant, seulement à titre d'exemple, mais elle englobe toutes les variantes que pourra envisager l'homme de l'art dans le cadre des revendications ci-après.

## Revendications

1. Dispositif (D) de contrôle de communications sur IP entre au moins deux équipements de communication (Ei) propres à s'échanger des paquets IP de données, générées par au moins un type de média, via au moins un réseau de communication (RC), comprenant des moyens de contrôle (MC) destinés à être implantés dans au moins un serveur (S) disposant d'une adresse IP et agencés i) pour déclencher sur requête la transmission de fichiers à exécuter vers des équipements de communication, lesdits fichiers étant destinés, une fois exécutés par un équipement de communication (Ei), à permettre, d'une part, l'enregistrement de façon automatisée auprès dudit serveur (S) de l'utilisateur de cet équipement de communication (Ei), et d'autre part, la prise de contrôle dans ledit équipement de communication (Ei) de chaque flux généré par un média dont l'accès a été autorisé par son utilisateur, et ii) en cas d'enregistrement auprès dudit serveur (S) d'au moins deux utilisateurs désirant établir une communication sur IP entre eux, pour organiser le relais et la gestion des flux autorisés entre les équipements de communication (Ei, Ei') de ces utilisateurs pendant la durée de la communication sur IP, lesdits fichiers étant agencés, une fois exécutés dans un équipement de communication (Ei), pour organiser l'établissement d'un canal de communication bidirectionnelle, via ledit réseau IP, entre ledit équipement de communication (Ei) et ledit serveur (S), et la transmission auxdits moyens de contrôle (MC), via ledit canal de communication, de données propres à leur permettre d'enregistrer l'utilisateur dudit équipement de communication (Ei) et chaque type de média dont l'accès a été autorisé par ledit utilisateur,
**caractérisé ce que** lesdits fichiers sont en outre agencés, une fois exécutés dans un équipement de communication (Ei) et lorsque l'utilisateur de ce dernier ne peut pas établir une communication sur IP avec un autre utilisateur du fait qu'il n'est pas enregistré auprès dudit serveur (S), pour permettre audit utilisateur de transmettre audit serveur (S), via ledit canal de communication, un message destiné à cet autre utilisateur, et en ce que lesdits moyens de contrôle (MC) sont agencés, lorsque ledit autre utilisateur s'enregistre auprès dudit serveur (S), pour signaler à cet autre utilisateur l'existence dudit message qui lui est destiné.

2. Dispositif selon la revendication 1, **caractérisé en ce que** lesdits fichiers sont agencés, une fois exécutés, pour prendre le contrôle de flux générés par des médias choisis dans un groupe comprenant au moins l'audio, la vidéo, le transfert de fichiers de données, la messagerie dite instantanée et la messagerie dite électronique.

3. Dispositif selon l'une des revendications 1 et 2, **caractérisé en ce que** ledit enregistrement auprès du serveur (S) est destiné soit à signaler qu'un utilisateur est prêt à participer à une communication sur IP, soit qu'un utilisateur souhaite qu'on lui transmette une liste d'autres utilisateurs enregistrés, soit encore qu'un utilisateur souhaite établir une communication sur IP avec au moins un autre utilisateur enregistré.

4. Dispositif selon l'une des revendications 1 à 3, **caractérisé en ce que** lesdits moyens de contrôle (MC) sont agencés, lorsqu'un utilisateur s'est enregistré auprès d'eux, pour stocker dans ledit serveur (S) des données représentatives d'une opération à effectuer lorsqu'un autre utilisateur enregistré cherche à établir une communication sur IP avec cet utilisateur, mais que ce dernier s'est désenregistré.

5. Dispositif selon la revendication 4, **caractérisé en ce que** ladite opération est choisie dans un groupe comprenant au moins un transfert d'appel vers un identifiant de communication donné, et la fourniture audit autre utilisateur d'un message préalablement enregistré par ledit utilisateur désenregistré et stocké dans ledit serveur (S).

6. Dispositif selon l'une des revendications 1 à 5, **caractérisé en ce que** lesdits fichiers sont agencés, une fois exécutés dans un équipement de communication (Ei), pour permettre à l'utilisateur de ce dernier de définir au moins un filtre destiné à sélectionner certains utilisateurs parmi tous ceux enregistrés, en fonction d'au moins un critère choisi, de sorte qu'il puisse choisir parmi ces utilisateurs sélectionnés chaque utilisateur enregistré avec lequel il veut établir une communication sur IP via ledit serveur (S).

7. Dispositif selon l'une des revendications 1 à 6, **caractérisé en ce que** lesdits fichiers sont agencés, une fois exécutés dans un équipement de communication (Ei) et une fois une communication sur IP établie avec au moins un autre utilisateur, pour permettre à l'utilisateur dudit équipement de communication (Ei) de sélectionner un nouveau média auquel il autorise l'accès ou de désélectionner un média auquel il avait autorisé l'accès.

8. Dispositif selon l'une des revendications 1 à 7, **caractérisé en ce qu'**il comprend des moyens de gestion (MG) couplés auxdits moyens de contrôle (MC), destinés à être implantés dans au moins un serveur (S) et agencés pour gérer la valorisation et/ou la facturation d'opérations effectuées par l'un au moins des utilisateurs impliqués dans une communication sur IP via ledit serveur (S), en fonction d'un barème choisi, et/ou la durée autorisée d'une communication sur IP via ledit serveur (S), en fonction d'au moins un critère choisi, et/ou la facturation d'une communication sur IP via ledit serveur (S) à l'un au moins des utilisateurs impliqués dans une communication sur IP, en fonction d'un barème choisi.

9. Serveur (S) pour un réseau de communication, **caractérisé en ce qu'**il comprend un dispositif de contrôle (D) selon l'une des revendications précédentes.

## Claims

1. Device (D) for controlling IP communications between at least two communications apparatus (Ei) adapted to exchange IP data packets, generated by at least one type of medium, through at least one communications network (RC), comprising control means (MC) intended to be installed in at least one server (S) having an IP address and arranged i) so as to initiate, on demand, the transmission of files to be executed to communications apparatus, said files being intended, once executed by a communications apparatus (Ei), to enable, on the one hand, automated registration with said server (S) of the user of this communications apparatus (Ei) and, on the other hand, taking of control, in said communications apparatus (Ei), of each stream generated by a medium to which access has been authorised by its user, and ii) in the case of registration with said server (S) of at least two users wishing to establish an IP communication between them, to organise the relaying and management of the authorised streams between the communications apparatus (Ei, Ei') of these users throughout the duration of the IP communication, said files being arranged, once executed in a communications apparatus (Ei), to organise the setup of a two-way communications channel, via said IP network, between said communications apparatus (Ei) and said server (S), and the transmission to said control means (MC), via said communications channel, of data adapted to enable them to register the user of said communications apparatus (Ei) and each type of media to which access has been authorised by said user, **characterised in that** said files are arranged, once executed in a communications apparatus (Ei) and when the user of the latter cannot establish an IP communication with another user owing to the fact that he is not registered with said server (S), to enable said user to send to said server (S), via said communications channel, a message intended for this other user, and **in that** said control means (MC) are arranged, when said other user registers with said server (S), to notify this other user of the existence of said message intended for him.

2. Device according to claim 1, **characterised in that** said files are arranged, once executed, to take control of the streams generated by media selected from a group comprising at least audio, video, data file transfer, so-called instant messaging and so-called electronic messaging.

3. Device according to one of claims 1 and 2, **characterised in that** said registration with the server (S) is intended either to indicate that a user is prepared to participate in an IP communication, or that a user wishes to be sent a list of other registered users, or that a user wishes to establish an IP communication with at least one other registered user.

4. Device according to one of claims 1 to 3, **characterised in that** said control means (MC) are arranged, when a user is registered with them, to store in said server (S) data representative of an operation that is to be carried out when another registered user seeks to establish an IP communication with this user, whilst the latter is unregistered.

5. Device according to claim 4, **characterised in that** said operation is selected from a group comprising a least one call forwarding to a given communications identifier, and the delivery to said other user of a message previously recorded by said unregistered user and stored in said server (S).

6. Device according to one of claims 1 to 5, **characterised in that** the files are arranged, once executed in a communications apparatus (Ei), to enable the user of the latter to define at least one filter intended to select certain users from among all those who are registered, in accordance with at least one selected criterion, so that he can choose, from among these selected users, each registered user with whom he wishes to establish an IP communication via said server (S).

7. Device according to one of claims 1 to 6, **characterised in that** the files are arranged, once executed in a communications apparatus (Ei) and once an IP communication has been established with at least one other user, to enable the user of said communications apparatus (Ei) to select a new medium to which they are authorising access or to deselect a medium to which they had authorised access.

8. Device according to one of claims 1 to 7, **characterised in that** it comprises management means (MG) coupled to said control means (MC), intended to be installed in at least one server (S) and arranged to manage the evaluation and/or billing of operations carried out by at least one of the users involved in an IP communication on said server (S), as a function of a selected schedule of charges, and/or the authorised duration of an IP communication on said server (S), as a function of at least one selected criterion, and/or the billing of an IP communication via said server (S) to at least one of the users involved in an IP communication, as a function of a selected schedule of charges.

9. Server (S) for a communications network, **characterised in that** it comprises a control device (D) according to one of the preceding claims.

## Patentansprüche

1. Vorrichtung (D) zur Kommunikationssteuerung über IP zwischen wenigstens zwei Kommunikationseinrichtungen (Ei), die in der Lage sind, IP-Datenpakete auszutauschen, erzeugt durch wenigstens einen Medientyp, über wenigstens ein Kommunikationsnetz (RC), mit Kontrolleinrichtungen (MC), die dazu dienen, wenigstens in einen Server (S) eingebaut zu werden, der über eine IP-Adresse verfügt und ausgerüstet ist, um i) auf Anfrage die Übertragung von auszuführenden Dateien zu Kommunikationseinrichtungen auszulösen, wobei die Dateien dazu bestimmt sind, wenn einmal durch eine Kommunikationseinrichtung (Ei) ausgeführt, einerseits die Registrierung auf automatische Weise auf dem Server (S) des Benutzers dieser Kommunikationseinrichtung (Ei), und andererseits die Steuerungsübernahme in der Kommunikationseinrichtung (Ei) von jedem Fluss, erzeugt durch ein Medium, zu ermöglichen, dessen Zutritt von seinem Benutzer erlaubt wurde, und ii) im Falle der Registrierung bei dem Server (S) von wenigstens zwei Benutzern, die wünschen, eine Kommunikation über IP zwischen ihnen einzurichten, um die Weitergabe und die Verwaltung der autorisierten Flüsse zwischen den Kommunikationseinrichtungen (Ei, Ei') dieser Benutzer zu organisieren, während der Dauer der Kommunikation über IP, wobei die Dateien in der Lage sind, nachdem sie einmal in einer Kommunikationseinrichtung (Ei) ausgeführt wurden, die Einrichtung eines zweigerichteten Kommunikationskanals über dieses IP-Netzwerk zu organisieren, zwischen der Kommunikationseinrichtung (Ei) und dem Server (S), und die Übertragung auf die Kontrolleinrichtungen (MC) über den Kommunikationskanal von Daten zu organisieren, die in der Lage sind, ihnen zu ermöglichen, den Benutzer der Kommunikationseinrichtung (Ei) und jeden Medientyp, dessen Zutritt von dem Benutzer erlaubt wurde, zu ermöglichen, **dadurch gekennzeichnet, dass** die Dateien unter anderem in der Lage sind, nachdem sie einmal in der Kommunikationseinrichtung (Ei) ausgeführt wurden, und wenn der Benutzer dieser letzteren keine Kommunikation über IP mit einem anderen Benutzer erstellen kann, aufgrund der Tatsache, dass er nicht bei dem Server (S) registriert ist, dem Benutzer zu ermöglichen, dem Server (S) über den Kommunikationskanal eine Nachricht zu übermitteln, die für diesen anderen Benutzer bestimmt ist, und dass die Kontrolleinrichtungen (MC) ausgestattet sind, wenn der Benutzer sich bei dem Server (S) registriert, dem anderen Nutzer die Existenz der Nachricht, die für ihn bestimmt ist, anzuzeigen.

2. Vorrichtung nach Anspruch 1, **dadurch gekennzeichnet, dass** die Dateien in der Lage sind, wenn sie einmal ausgeführt sind, die Steuerung der Flüsse, die von den Medien erzeugt wurden, die ausgewählt sind aus einer Gruppe, die wenigstens das Audio, das Video, die Übertragung von Datendateien, die Nachrichtenübertragung genannt augenblicklich und die Nachrichtenübertragung genannt elektronisch, zu übernehmen.

3. Vorrichtung nach Anspruch 1 oder 2, **dadurch gekennzeichnet, dass** die Registrierung bei dem Server (S) dazu dient, entweder zu signalisieren, dass ein Benutzer bereit ist, an einer Kommunikation über IP teilzunehmen, oder dass ein Benutzer wünscht, dass man ihm eine Liste der anderen registrierten Benutzer übermittelt, oder auch dass ein Benutzer wünscht, eine Kommunikation über IP mit wenigstens einem anderen registrierten Benutzer einzurichten.

4. Vorrichtung nach einem der Ansprüche 1 bis 3, **dadurch gekennzeichnet, dass** die Kontrolleinrichtungen (MC) in der Lage sind, wenn sich ein Benutzer bei ihnen registriert hat, in dem Server (S) Daten zu speichern, die einem auszuführenden Vorgang entsprechen, wenn ein anderer registrierter Benutzer danach sucht, eine Kommunikation über IP mit diesem Benutzer einzurichten, jedoch sich der letztere abgemeldet hat.

5. Vorrichtung nach Anspruch 4, **dadurch gekennzeichnet, dass** der Vorgang aus einer Gruppe ausgewählt wird, die wenigstens eine Anrufübertragung zu einer vorgegebenen Kommunikationsidentifizierung, und die Lieferung zu dem anderen Benutzer einer vorher registrierten Nachricht durch den abgemeldeten Benutzer und in dem Server (S) gespeichert, aufweist.

6. Vorrichtung nach einem der Ansprüche 1 bis 5, **dadurch gekennzeichnet, dass** die Dateien in der Lage sind, wenn sie einmal, in einer Kommunikationseinrichtung (Ei) ausgeführt wurden, um einem Benutzer von letzterer zu ermöglichen, wenigstens einen Filter zu definieren, der geeignet ist, Bestimmte der Benutzer unter allen diesen Registrierten auszuwählen, in Abhängigkeit von wenigstens einem gewählten Kriterium, derart, dass er unter den gewählten Benutzern jeden registrierten Benutzer wählen kann, mit dem er eine Kommunikation über IP zu dem Server (5) herstellen möchte.

7. Vorrichtung nach einem der Ansprüche 1 bis 6, **dadurch gekennzeichnet, dass** die Dateien in der Lage sind, wenn sie einmal in eine Kommunikationseinrichtung (Ei) ausgeführt wurden und wenn einmal eine Kommunikation über IP mit wenigstens einem anderen Benutzer eingerichtet wurde, um dem Benutzer der Kommunikationseinrichtung (Ei) zu ermöglichen, ein neues Medium auszuwählen, zu dem er den Zutritt wählt, oder ein Medium zu verlassen, zu dem er Zutritt hatte.

8. Vorrichtung nach einem der Ansprüche 1 bis 7, **dadurch gekennzeichnet, dass** sie Verwaltungseinrichtungen (MG) aufweist, die mit den Kontrolleinrichtungen (MC) gekoppelt sind, die dazu dienen, in wenigstens einen Server (S) eingebaut zu werden, und in der Lage sind, die Wertstellung und/oder die Rechnungsstellung von Vorgängen, die durch wenigstens einen der Benutzer ausgeführt wurden, eingeschrieben in eine Kommunikation über IP über den Server (S), zu erzeugen, in Abhängigkeit einer gewählten Bemessungsgrundlage, und/oder der erlaubten Dauer einer Kommunikation über IP über den Server (S), in Abhängigkeit von wenigstens einem ausgewählten Kriterium, und/oder der Rechnungsstellung einer Kommunikation über IP zu dem Server (S) zu wenigstens einem der eingeschriebenen Benutzer in einer Kommunikation über IP, in Abhängigkeit einer gewählten Bemessungsgrundlage.

9. Server (S) für ein Kommunikationsnetz, **dadurch gekennzeichnet, dass** er eine Kontrollvorrichtung (D) nach einem der vorgenannten Ansprüche aufweist.
